# EUROPEAN PATENT SPECIFICATION

(11) **EP 2 210 388 B1**
(45) Date of publication and mention of the grant of the patent: **07.08.2013**
(21) Application number: 07822161.1
(22) Date of filing: 02.11.2007
(51) Int. Cl.: H04L 12/14

(54) **METHODS AND APPARATUSES FOR THE EXCHANGE OF CHARGING CAPABILITIES AND FOR CHARGING COOPERATION IN A COMMUNICATIONS NETWORK**
VERFAHREN UND VORRICHTUNGEN ZUM AUSTAUSCH VON FAKTURIERUNGSFÄHIGKEITEN UND ZUR FAKTURIERUNGSKOOPERATION IN EINEM KOMMUNIKATIONSNETZ
PROCEDES ET DISPOSITIFS POUR L'ECHANGE DES CAPACITES DE FACTURATION ET POUR LA COOPERATION DE FACTURATION DANS UN RESEAU DE COMMUNICATION

(43) Date of publication of application: 28.07.2010
(73) Proprietor: Telefonaktiebolaget LM Ericsson (publ), 164 83 Stockholm (SE)
(72) Inventor: DAHL, Jan, S-125 56 Älvsjö (SE); CARDENO TRIANO, Manuel, E-28045 Madrid (ES)
(74) Representative: Blake, Stephen James
(86) International application number: PCT/EP2007/061832
(87) International publication number: WO 2009/056174

(56) References cited:
- EP-A- 1 662 702
- WO-A-2004/004301
- "Digital cellular telecommunications system (Phase 2+); Universal Mobile Telecommunications System (UMTS); Telecommunication management; Charging management; IP Multimedia Subsystem (IMS) charging (3GPP TS 32.260 version 7.4.0 Release 7); ETSI TS 132 260" ETSI STANDARDS, LIS, SOPHIA ANTIPOLIS CEDEX, FRANCE, vol. 3-SA5, no. V7.4.0, 1 October 2007 (2007-10-01), XP014040190 ISSN: 0000-0001
- ROSENBERG J ET AL: "SIP: Session Initiation Protocol", 20020601; 20020600, 1 June 2002 (2002-06-01), pages 1-269, XP015009039,

## Description

### Technical field

The present invention relates to a method and apparatus for use in a communications network, for example a Universal Mobile Telecommunications System having an IP Multimedia Subsystem.

### Background

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64 kbps limit of ISDN through the GSM call network, which is a necessity for UMTS data transmission rates of up to 2 Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.228 V5.8.0 (2004-03).

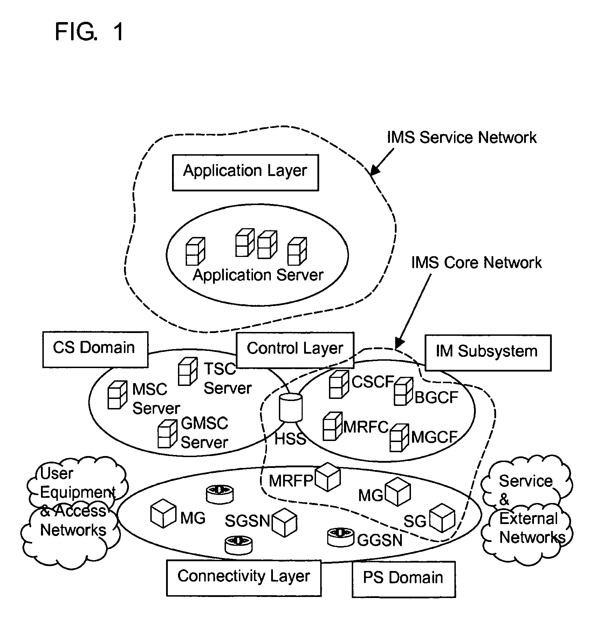

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criterion for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select a S-CSCF if a S-CSCF is not already selected. The I-CSCF receives the required S-CSCF capabilities from the home network's Home Subscriber Server (HSS), and selects an appropriate S-CSCF based on the received capabilities. (It is noted that S-CSCF allocation is also carried out for a user by the I-CSCF in the case where the user is called by another party, and the user is not currently allocated an S-CSCF.) When a registered user subsequently sends a session request to the IMS, the P-CSCF is able to forward the request to the selected S-CSCF based on information received from the S-CSCF during the registration process.

Within the IMS service network, Application Servers (ASs) are provided for implementing IMS service functionality. Application Servers provide services to end-users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment. Different IFCs may be applied to different call cases. The IFCs are received by the S-CSCF from an HSS during the IMS registration procedure as part of a user's User Profile. Certain Application Servers will perform actions dependent upon subscriber identities (either the called or calling subscriber, whichever is "owned" by the network controlling the Application Server). For example, in the case of call forwarding, the appropriate (terminating) application server will determine the new terminating party to which a call to a given subscriber will be forwarded. In the case that an IFC indicates that a SIP message received at the S-CSCF should be forwarded to a particular SIP AS, that AS is added into the message path. Once the SIP message is returned by the AS to the S-CSCF, it is forwarded on towards its final destination, or forwarded to another AS if this is indicated in the IFCs.

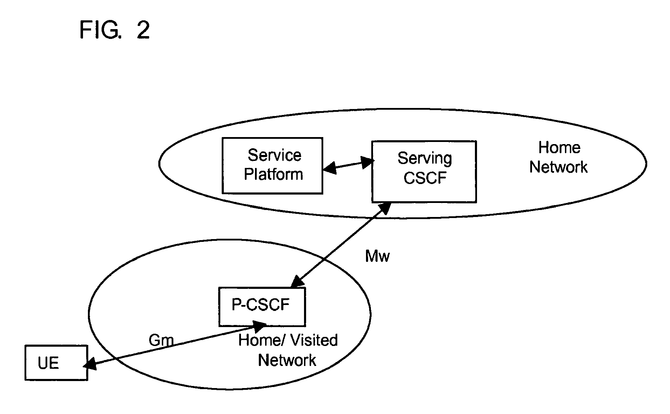

3GPP TS 32.260 defines the IMS charging architecture and principles and thereby defines when to send charging information and when not to send charging information. 3GPP TS 23.228 sets out the architecture and interfaces defining the framework for interaction between the network elements executing the service, the Application Servers (AS), and the S-CSCF as the core element responsible for the service triggering analysis and charging traffic function. Key elements of the system are illustrated schematically in Figure 2 of the accompanying drawings. Chapter 4.2.4 in [TS 23.228] describes the IP Multimedia Service Control (ISC) interface between the S-CSCF and the service platform (e.g. an AS). The SIP Application Server may host and execute services. The SIP Application Server can influence and impact the SIP session on behalf of the services and it uses the ISC interface to communicate with the S-CSCF.

In the context of any service execution, at least one charging determination point must exist to either generate accounting records (for offline charging) or requesting quota/authorization (for online charging) for this particular service or session. Offline charging is a post-paid type of charging scheme whereby charging is performed after a service has been consumed by the user; for example the user might receive a monthly bill showing chargeable items from the previous month. Online charging is a pre-paid type of charging scheme, where network entities would consult with the charging system before allowing a user access to the requested service.

According to [TS 32.260] and [TS 32.299], different IMS nodes can act as Charging Triggering Functions (CTFs); in particular, either the S-CSCF or the ASs (or both) can act as CTF for most traffic events and all service invocations.

The present applicant has appreciated the following problem with the situation as it is currently specified.

There are currently no mechanisms allowing a S-CSCF to distinguish, per AS or executed service, what kind of capabilities the AS in question incorporates. In particular, when it comes to charging capabilities, it is impossible for the S-CSCF to know in advance if the AS to be invoked is capable of acting as CTF or not. Consequently, in order to avoid double charging information (from both the S-CSCF and the ASs) the S-CSCF must be configurable to possibly prevent charging when an AS is invoked.

The only AS information available to the S-CSCF is the SIP URI and possibly a feature tag (as a Communication Service Identifier), downloaded as part of the IFC service triggering data provisioned to each and every user.

The use of a configuration option in the S-CSCF implies an "all or nothing" decision, generic for all ASs, as the S-CSCF would otherwise have to be modified each time a new AS is introduced in the network. In other words, a possible disabling of charging functions in S-CSCF when an AS is invoked is not based on the capabilities of that AS but a global decision made by the operator whether to accept possible double charging information or not.

It is desirable to address the above issue as identified and explained by the present applicant.

EP1662702A discloses call control with converged application server logic and gateway logic in IMS networks.

### Summary

According to a first aspect of the present invention there is provided a method for use by a Serving Call Session Control Function, S-CSCF, of an IP Multimedia Subsystem, IMS. The method comprises, for each of a plurality of services being administered to users by the S-CSCF, determining the charging capabilities of an Application Server, AS, of the IMS providing the service, and cooperating with the AS in the generation of charging information relating to the service.

The determined charging capabilities may be used to decide where the charging information is to be generated; for example a decision could be made to generate charging information at the S-CSCF only, or at the AS only, or at both with suitable cooperation. This allows charging information to be generated at the most appropriate location, selected in dependence upon the determined charging capabilities.

A method embodying the present invention advantageously allows the S-CSCF to cooperate with the AS to avoid an unnecessary duplication of charging information between the S-CSCF and the AS.

A method embodying the present invention advantageously allows the S-CSCF to cooperate with the AS to avoid an unnecessary loss of charging information between the S-CSCF and the AS.

Charging capabilities information may be exchanged with the AS, so that there may be a two-way flow of such information to form the basis of cooperation between the nodes to generate charging information.

A record identifying each AS may be maintained, and this record may incorporate the determined charging capabilities for each AS, this record being referred to in later use.

As an option, which AS is providing the service can be determined using an Initial Filter Criteria, IFC, received as part of a registration procedure.

An embodiment of the present invention allows flexibility as to when the charging capabilities are determined; in this respect the charging capabilities determining step can be performed as part of a registration procedure or as part of an invite procedure, for example. The registration and invite procedures may be Session Initiation Protocol, SIP, registration and invite procedures. Alternatively, the charging capabilities determining step could be performed at a first traffic interaction towards the AS.

There is also flexibility as to the method used to determine the charging capabilities of the AS. As an option, the charging capabilities of the AS can be determined using a Session Initiation Protocol, SIP, method.

For example, as an option the charging capabilities of the AS can be determined by use of an Extensible Markup Language, XML, body in a response, such as a 200 OK response, to a Session Initiation Protocol, SIP, OPTIONS method performed between the S-CSCF and the AS.

The charging capabilities of the AS can also be determined by use of a Session Initiation Protocol, SIP, Private header comprising the capabilities in a Session Initiation Protocol, SIP, OPTIONS method performed between the S-CSCF and the AS.

As a further option, the charging capabilities of the AS can be determined by use of a SIP Private header comprising the capabilities in a 200 OK response to a Session Initiation Protocol, SIP, REGISTER message received at the AS.

As a further option, the charging capabilities of the AS can be determined by use of a Lightweight Directory Access Protocol, LDAP, or Hypertext Transfer Protocol, HTTP, request to the AS

An embodiment of the present invention allows charging information to be generated in dependence upon the determined charging capabilities, which has not been previously proposed.

According to a second aspect of the present invention there is provided a method for use by an Application Server, AS, of an IP Multimedia Subsystem, IMS, the AS providing a service for at least one user. The method comprises providing the charging capabilities of the AS to a Serving Call Session Control Function, S-CSCF, of the IMS administering the service to the user. The AS then cooperates with the S-CSCF in the generation of charging information relating to the service.

Also disclosed is a method for use by a first Session Initiation Protocol, SIP, enabled node of a network to determine capabilities information of a second SIP enabled node of the network. The method comprises use of an Extensible Markup Language, XML, body to carry the capabilities information in a response to a SIP OPTIONS method performed between the first and second nodes.

As an option, the response is a 200 OK response. This method is particularly but not exclusively advantageous when applied to an IP Multimedia Subsystem, IMS, in which case the first and second nodes would be nodes of an IMS.

According to a third aspect of the present invention there is provided an apparatus for use as or in a Serving Call Session Control Function, S-CSCF, of an IP Multimedia Subsystem, IMS. The apparatus comprises means for determining, for each of a plurality of services being administered to users by the S-CSCF, the charging capabilities of an Application Server, AS, of the IMS providing the service. The apparatus also comprises means for cooperating with the AS in the generation of charging information relating to the service.

According to a fourth aspect of the present invention there is provided an apparatus for use as or in an Application Server, AS, of an IP Multimedia Subsystem, IMS, the AS providing a service for at least one user. The apparatus comprises means for providing the charging capabilities of the AS to a Serving Call Session Control Function, S-CSCF, of the IMS administering the service to the user. The apparatus also comprises means for cooperating with the S-CSCF in the generation of charging information relating to the service.

Also disclosed is an apparatus for use as or in a first Session Initiation Protocol, SIP, enabled node of a network. The apparatus comprises means for determining capabilities information of a second SIP enabled node of the network by use of an Extensible Markup Language, XML, body to carry the capabilities information in a response to a SIP OPTIONS method performed between the first and second nodes.

According to a fifth aspect of the present invention there is provided a program for controlling an apparatus to perform a method according to the first or second aspect of the present invention or which, when loaded into an apparatus, causes the apparatus to become an apparatus according to the third or fourth aspect of the present invention. The program may be carried on a carrier medium. The carrier medium may be a storage medium. The carrier medium may be a transmission medium.

Also disclosed is an apparatus programmed by a program according to the fifth aspect of the present invention.

According to a sixth aspect of the present invention there is provided a storage medium containing a program according to the fifth aspect of the present invention.

Also disclosed is a method and apparatus for use by a first Session Initiation Protocol, SIP, enabled node of a network to determine capabilities information of a second SIP enabled node of the network, the method comprising use of SIP Private header to carry the capabilities in a SIP OPTIONS method performed between the first and second nodes.

Also disclosed is a method and apparatus for use by a first Session Initiation Protocol, SIP, enabled node of a network to determine capabilities information of a second SIP enabled node of the network, the method comprising use of a SIP Private header carrying the capabilities in a 200 OK response to a SIP REGISTER message received at the second node.

Also disclosed is a method and apparatus for use by a first Session Initiation Protocol, SIP, enabled node of a network to determine capabilities information of a second SIP enabled node of the network, the method comprising use of a Lightweight Directory Access Protocol, LDAP, or Hypertext Transfer Protocol, HTTP, request to the second node.

A technical advantage of the invention is that the most optimal CTF can be chosen depending on the capabilities of the AS in question for a certain call/service, thereby allowing the usage of network resources to be optimized, and ensuring that duplicated charging information can be avoided, and also that charging information is not missed out completely either.

### Brief description of the drawings

Figure 1, discussed hereinbefore, illustrates schematically the integration of an IP Multimedia Subsystem into a 3G mobile communications system;
Figure 2, also discussed hereinbefore, is a schematic illustration of key elements of a network for use in explaining the background to the present invention;
Figure 3 is a message exchange diagram illustrating operation according to a first example embodying the present invention;
Figure 4 is a message exchange diagram illustrating operation according to a second example embodying the present invention;
Figure 5 is a message exchange diagram illustrating operation according to a third example embodying the present invention; and
Figure 6 is a schematic illustration of a S-CSCF and an AS embodying the present invention.

### Detailed description

As explained above, there are currently no mechanisms allowing a S-CSCF to distinguish, per AS or executed service, what kind of capabilities the AS in question incorporates. So, in order to avoid double charging information, at present the S-CSCF must be configurable to prevent charging when an AS is invoked, on an "all or nothing" basis and controlled centrally by the operator.

To overcome this limitation, a charging capabilities exchange mechanism must be in place in the context of the S-CSCF and AS IMS entities.

On the other hand, there are existing mechanisms already specified in SIP [RFC 3261] to facilitate the exchange of capabilities between SIP entitics, based on the use of the OPTIONS method, as well as the use of Allow, Accept, Accept-Language and Supported headers.

The Allow, Accept, Accept-Language, and Supported header fields convey some information about the capabilities of a user agent. However, these header fields convey only a small part of the information that is needed. They do not provide a general framework for expression of capabilities. Furthermore, they only specify capabilities indirectly; the header fields really indicate the capabilities of the UA as they apply to this request. SIP also has no ability to convey characteristics, that is, information that describes a UA.

The SIP OPTIONS method, further specified in [RFC 3840], allows a UA to query another UA or a proxy server as to its capabilities. This allows a client to discover information about the supported methods, content types, extensions, codecs, etc. without "ringing" the other party. For example, before a client inserts a Require header field into an INVITE listing an option that it is not certain the destination User Agent Server (UAS) supports, the client can query the destination UAS with an OPTIONS to see if this option is returned in a Supported header field. All UAs must support the OPTIONS method, even an AS in the context of IMS.

Thus, this is considered to provide a more general framework for an indication of capabilities and characteristics in SIP. Capability and characteristic information about a UA can be carried as parameters of the Contact header field. These parameters can be used within REGISTER requests and responses, OPTIONS responses, and requests and responses that create dialogs (such as INVITE).

The following is what the RFC considers to be a "capability" and a "characteristic":

As defined in RFC 2703, a "capability" is an attribute of a sender or receiver (often the receiver) which indicates an ability to generate or process a particular type of message content. A capability is distinct from a characteristic in that a capability may or may not be utilized in any particular call, whereas a characteristic is a non-negotiable property of a UA. SIP itself will often negotiate whether or not capabilities are used in a call.

A "characteristic" is like a capability, but describes an aspect of a UA which is not negotiable. As an example, whether or not a UA is a mobile phone is a characteristic, not a capability. The semantics of this specification do not differentiate between capability and characteristic, but the distinction is useful for illustrative purposes.

At the SIP level, these mechanisms are widely known and standardized, requiring as well to follow the normal process when registering capabilities, through standard track RFCs and IANA registration [IANAreg]. Those mechanisms for features, media features, and features and option tags require not only the aforementioned registration and definition using standard track and informational RFCs, but also require consensus to be accepted by the IETF community.

In any case, the unique nature of IMS entities and the way they interrelate with each other requires specific mechanisms to exchange these charging capabilities, as will now be described.

According to an embodiment of the present invention, a mechanism is provided to allow the exchange of charging capabilities, between an AS, defined in the IMS network and therefore assigned to any IFC provisioned to that IMS network users, and the corresponding S-CSCF where the user in question is registered. The S-CSCF communicates with new ASs that it finds in IFCs and stores the AS capabilities found in the response.

For each call/service involving an AS, the S-CSCF chooses whether or not to generate charging information based on the capabilities of that AS. This makes it possible to optimize the charging information generated by the network; double charging information can be avoided in this way, as well as the risk of not generating charging information for a certain service/AS.

The number and type of ASs incorporated in the IMS network can vary during the course of time, and thereby also the IFC triggers, but the extra signalling introduced for the S-CSCF would be limited to only one transaction per new AS incorporated to the AS list kept in the S-CSCF, for those alternatives where this transaction is proposed.

A solution embodying the present invention makes use of the following differentiated procedures:
- A mechanism in the S-CSCF to identify the different ASs being assigned to each IFC downloaded for each user successfully registered.
- A procedure by which the S-CSCF dynamically builds up the list of ASs configured in the IMS domain of the S-CSCF in question.
- A protocol interaction by which the S-CSCF obtains from each AS incorporated to the aforementioned list its capabilities.

The actual mechanism used to exchange the charging capabilities between the AS and the S-CSCF is not fixed, and three different possible alternatives are described below, by way of example.

Having obtained the charging capabilities of each AS, the decision as to whether or not to apply charging in the S-CSCF when an AS is invoked can then be based on the actual charging capabilities of the AS in question.

Three alternatives for the capability exchange will now be explained in turn, by way of example.

### Alternative 1: Exchange of capabilities during the registration phase

When the S-CSCF has extracted the ASs from the IFC downloaded at registration time, the S-CSCF can build up the AS list. For each new AS incorporated to the list, the S-CSCF carries out a protocol interaction with the AS in question to request its capabilities.

Several protocol options are available, as for instance a Lightweight Directory Access Protocol (LDAP) or Hypertext Transfer Protocol (HTTP) query to the AS's URI.

SIP can also be used, which represents an advantage implementation-wise. If SIP is used, two basic alternatives are proposed:
- The use of an Extensible Markup Language (XML) body in a response (200 OK) to an OPTIONS method exchanged between the S-CSCF and every new AS.
- The use of a new SIP Private header containing the AS capabilities in either a OPTIONS method exchanged or the 200 OK response to the REGISTER method received in the AS when third-party registration is in place.

One possible disadvantage of using the third-party registration mechanism is that the AS in question has to subscribe to the mechanism, which may not always be the case.

The OPTIONS method can be used in many ways to obtain SIP UA capabilities, as defined in [RFC 3261]. Perhaps the most straightforward approach, and at the same time the most future-proof, is through the exchange of a message body in the 200 OK response to the OPTIONS request where the capabilities of the AS are expressed for instance in an XML document. This would involve the inclusion of the "Application/XML" in the "Accept" header of the OPTIONS request sent by S-CSCF.

The use of an IMS XML body is already envisioned in 3GPP [24.229] where a very basic data scheme is standardized for different purposes, none of them covering the scope of this invention. Therefore, an extension of this IMS XML body mechanism would be necessary, if the charging capabilities support is to be standardized. Ideally, this IMS XML body should be extended in such a way that the data scheme included is qualified and advertised inside the body itself, by specifying a concrete "name space" defining the scope and data scheme, e.g. whether the data to follow is standardized in IMS itself, or belongs to an operator defined set of capabilities or any other entity (e.g. ETSI/TISPAN) etc.

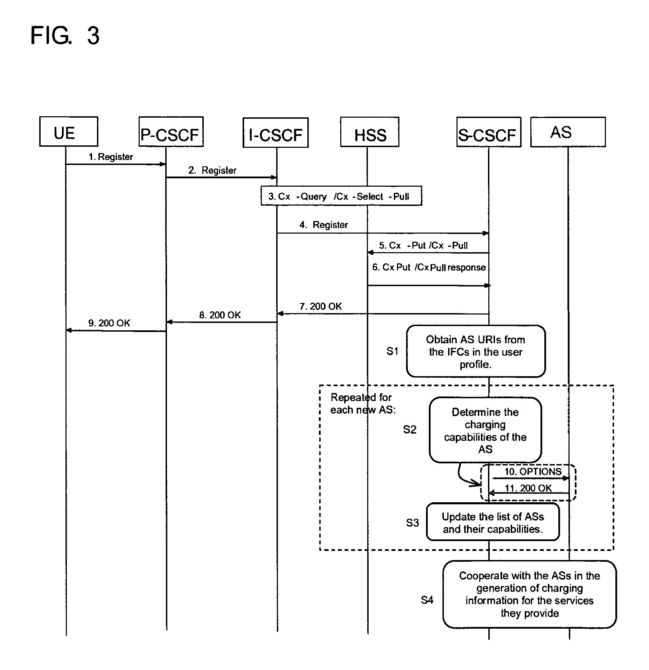

An example flow of events in this alternative is reflected in Figure 3. Steps 1 to 9 of Figure 3 can be steps in a conventional SIP registration procedure, and these steps need not be described here; further information concerning these steps can be found in the literature. However, in an embodiment of the present invention, additional steps S1 to S4 are performed, with step S2 incorporating additional steps 10 and 11. Of these, steps S1 to S3 can be considered to form part of the registration procedure, or can be considered to be separate from but at least associated with the registration procedure.

In step S1 the S-CSCF obtains an identification of each AS from the IFCs in the user profile as part of the registration procedure, the identification being in this embodiment the URIs associated with the respective ASs. For each new AS, the charging capabilities of the AS are determined by the S-CSCF in step S2 and a list of ASs and their respective capabilities is maintained and updated in step S3. In this example, the charging capabilities are determined in step S2 by sending a SIP OPTIONS message to the AS (step 10) and processing the 200 OK response received back from the AS (step 11). Thereafter, the S-CSCF cooperates with the ASs in the generation of charging information for the services that the ASs provide, the services being administered to the users by the S-CSCF, and this cooperation is represented as step S4.

### Alternative 2: Exchange of capabilities in traffic time

An alternative to the one above is to build up the list of ASs at registration in the same or a similar way as in the first alternative, but the actual exchange of capabilities takes place at the first traffic interaction towards the new AS.

The exchange of capabilities would then take place when S-CSCF and the AS in question are first communicating using the SIP INVITE method.

In this case, the AS would return its capabilities in the first 200 OK to the S-CSCF, the 200 OK being used as a capability container. Again, two basic methods are proposed to carry AS capabilities:
- The exchange of an XML body including the AS capabilities in the 200 OK to the SIP method sent to the AS.
- The inclusion of a SIP Private header in the 200 OK.

However, the use of a SIP private header would have to be documented in an Informational RFC, mutually agreed between IETF and 3GPP.

Alternatively, in connection with the reception of the INVITE in the AS and its reply with a 200 OK, other protocol alternatives as a LDAP or HTTP POST query could be possible, but they are seen as being less optimal.

A drawback with this alternative in general is that the call flow defined by 3GPP states that the initial Credit-Control-Request is sent before the INVITE is passed on and at that time the S-CSCF does not yet know whether or not it will be the CTF. This means that an unnecessary credit control session may be started from the S-CSCF for the first call to a new AS. In practical terms, this is a relatively insignificant drawback, as the capabilities would be exchanged and stored only at first contact with one AS.

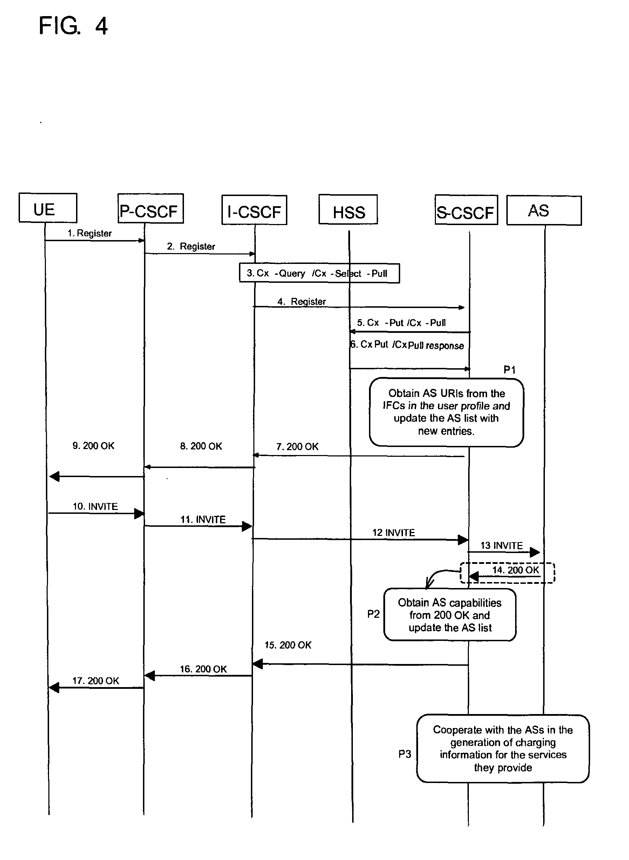

One possible flow of events is reflected in the illustrative message exchange diagram of Figure 4. Steps 1 to 17 of Figure 4 are largely conventional steps in a SIP registration procedure and subsequent SIP invite procedure, and these steps need not be described here except where there is a departure from conventional procedures; further information concerning these steps can be found in the literature.

In an embodiment of the present invention, additional steps P1 to P3 are performed. Of these, step P1 can be considered to form part of the registration procedure, or can be considered to be separate from but at least associated with the registration procedure. Step P2 can be considered to form part of the invite procedure, or can be considered to be separate from but at least associated with the invite procedure.

In step P1, the S-CSCF obtains an identification of each AS from the IFCs in the user profile obtained as part of the registration procedure, the identification being in this embodiment the respective URIs associated with the ASs. A list of ASs and their respective capabilities is maintained, and in step P1 the S-CSCF updates this list with the AS URIs (their respective capabilities will be updated later).

When a 200 OK message is subsequently received by the S-CSCF from one of the ASs as part of an invite procedure, the charging capabilities of the AS are determined from the 200 OK by the S-CSCF in step P2, and the list of ASs and their respective capabilities is updated with this information. In this respect, the 200 OK message comprises charging capability information, for example using one of the methods suggested previously.

Thereafter, the S-CSCF cooperates with the ASs in the generation of charging information for the services that the ASs provide, the services being administered to the users by the S-CSCF, and this cooperation is represented as step P3.

### Alternative 3: AS capabilities attached to each AS data downloaded in the IFCs

Another alternative is to add an additional piece of information reflecting AS capabilities associated to the AS name downloaded in the Cx Pull Response from the HSS during a SIP registration procedure.

In essence, the information included would be the same as defined for a XML body or a SIP Private header, for example.

This solution, although apparently simple, requires a data model change to be reflected in the current structure of IFCs, see [TS23.228] and corresponding provisioning work.

Apart from the relative drawback behind every extension of the IFC's data model, an additional problem with this alternative could arise from the fact that any update in software capabilities in any AS would mean an additional provisioning cycle of IFCs for each and every user.

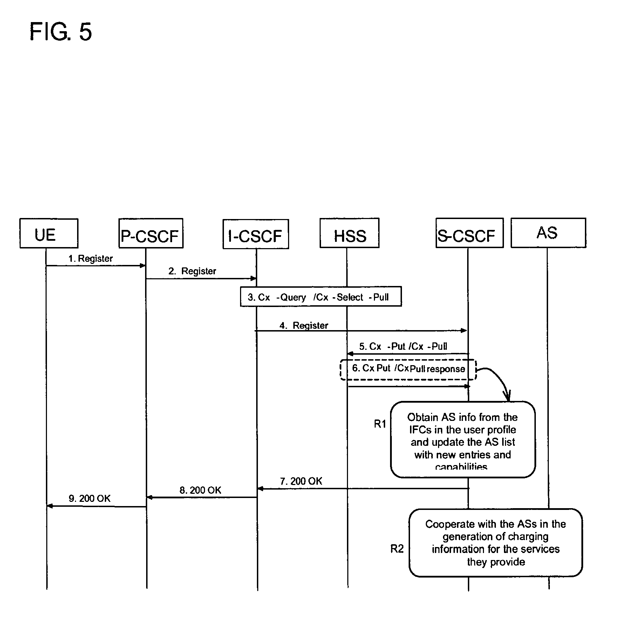

An example flow of events in this alternative is reflected in Figure 5. Steps 1 to 9 of Figure 3 are steps in a generally conventional registration procedure, except that capabilities information is included in the Cx Pull Response received from the HSS by the S-CSCF in step 6. This is processed by the S-CSCF in step R1, with the charging capabilities of the AS being determined and a list of ASs and their respective capabilities being maintained. Thereafter, the S-CSCF cooperates with the ASs in the generation of charging information for the services that the ASs provide, the service being administered to the users by the S-CSCF, and this cooperation is represented as step R2.

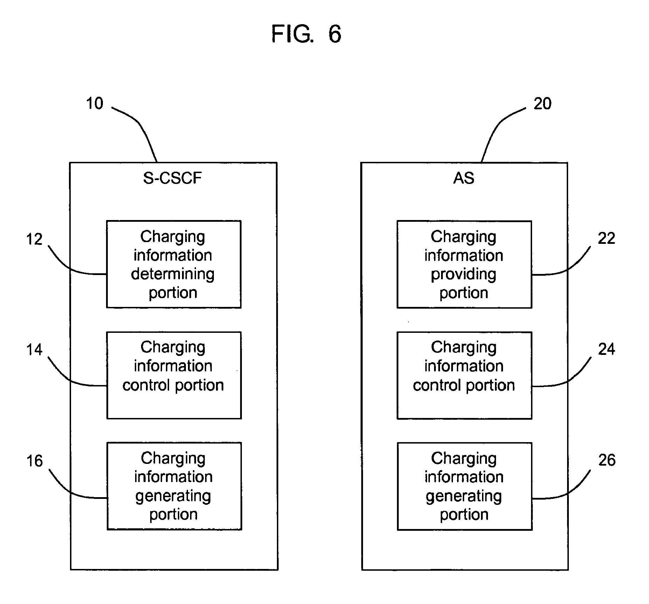

Figure 6 is a schematic illustration of a S-CSCF 10 and an AS 20 embodying the present invention, for performing a method embodying the present invention as described above with reference to any of Figures 3 to 5. The S-CSCF 10 comprises a charging information determining portion 12 for determining the charging capabilities of the AS 20, while the AS 20 comprises a charging information providing portion 22 for providing its charging capabilities on request to the S-CSCF 10. In dependence upon the charging capabilities so determined, a charging information generating portion 16 of the S-CSCF 10 and a corresponding charging information generating portion 26 of the AS 20 cooperate to generate charging information relating to the service provided by the AS 20. This happens under control of a charging information control portion 14 of the S-CSCF 10 and a corresponding charging information control portion 24 of the AS 20. It may be that all of the charging information relating to the service is generated at the S-CSCF 10, or it may be that all of the charging information is generated at the AS 20, or it may be that some of the charging information is generated at the S-CSCF 10 and the rest at the AS 20.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims. In particular, it will be appreciated that, although described in relation to a Universal Mobile Telecommunications System having an IP Multimedia Subsystem, the present invention is also applicable to corresponding parts of other types of network.

## Claims

1. A method for use by a Serving Call Session Control Function, S-CSCF (10), of an IP Multimedia Subsystem, IMS, the method being **characterised by** comprising, for each of a plurality of services being administered to users by the S-CSCF (10), determining (S2; P2; R1) the charging capabilities of an Application Server, AS (20), of the IMS providing the service, and cooperating (S4; P3; R2) with the AS (20) in the generation of charging information relating to the service.

2. A method as claimed in claim 1, comprising:
using the determined charging capabilities to decide where the charging information is to be generated; and/or
cooperating with the AS to avoid an unnecessary duplication of charging information between the S-CSCF and the AS; and/or
cooperating with the AS to avoid an unnecessary loss of charging information between the S-CSCF and the AS; and/or
exchanging charging capabilities information with the AS; and/or
maintaining a record identifying each AS; and/or
maintaining a record of the determined charging capabilities for each AS; and/or
performing the charging capabilities determining step at a first traffic interaction towards the AS; and/or
generating charging information in dependence upon the determined charging capabilities.

3. A method as claimed in any preceding claim, comprising determining which AS is providing the service using an Initial Filter Criteria, IFC, received as part of a registration procedure.

4. A method as claimed in any preceding claim, comprising performing the charging capabilities determining step as part of a registration procedure.

5. A method as claimed in any preceding claim, comprising performing the charging capabilities determining step as part of an invite procedure.

6. A method as claimed in claim 3, 4 or 5, wherein the procedure is a Session Initiation Protocol, SIP, procedure.

7. A method as claimed in any preceding claim, comprising determining the charging capabilities of the AS using a Session Initiation Protocol, SIP, method.

8. A method as claimed in claim 7, wherein determining the charging capabilities of the AS comprises use of one of:
an Extensible Markup Language, XML, body in a response to a Session Initiation Protocol, SIP, OPTIONS method performed between the S-CSCF and the AS, where the response may be a 200 OK response;
a Session Initiation Protocol, SIP, Private header comprising the capabilities in a Session Initiation Protocol, SIP, OPTIONS method performed between the S-CSCF and the AS;
a SIP Private header comprising the capabilities in a 200 OK response to a Session Initiation Protocol, SIP, REGISTER message received at the AS; and
a Lightweight Directory Access Protocol, LDAP, or Hypertext Transfer Protocol, HTTP, request to the AS.

9. A method for use by an Application Server, AS (20), of an IP Multimedia Subsystem, IMS, the AS (20) providing a service for at least one user, and the method being **characterised by** comprising providing (S2; P2) the charging capabilities of the AS (20) to a Serving Call Session Control Function, S-CSCF, of the IMS administering the service to the user, and cooperating (S4; P3) with the S-CSCF in the generation of charging information relating to the service.

10. An apparatus for use as or in a Serving Call Session Control Function, S-CSCF (10), of an IP Multimedia Subsystem, IMS, the apparatus being **characterised by** comprising means (12) for determining, for each of a plurality of services being administered to users by the S-CSCF, the charging capabilities of an Application Server, AS (20), of the IMS providing the service, and means (16) for cooperating with the AS (20) in the generation of charging information relating to the service.

11. An apparatus for use as or in an Application Server, AS (20), of an IP Multimedia Subsystem, IMS, the AS (20) providing a service for at least one user, and the apparatus being **characterised by** comprising means (22) for providing the charging capabilities of the AS (20) to a Serving Call Session Control Function, S-CSCF (10), of the IMS administering the service to the user, and means (26) for cooperating with the S-CSCF in the generation of charging information relating to the service.

12. A program which, when run on an apparatus, causes the apparatus to perform a method as claimed in any one of claims 1 to 9.

13. A program as claimed in claim 12, carried on a carrier medium.

14. A program as claimed in claim 13, wherein the carrier medium is a transmission medium.

15. A storage medium containing a program as claimed in claim 12.

## Patentansprüche

1. **Verfahren zur Verwendung durch eine versorgende** Rufsitzungssteuerungsfunktion, S-CSCF (10), eines IP-Multimediasubsystems, IMS, wobei das Verfahren **dadurch gekennzeichnet ist, dass** es umfasst: für jeden aus einer Vielzahl von Diensten, die Nutzern durch die S-CSCF (10) geleistet werden, erfolgendes Bestimmen (S2; P2; R1) der Abrechnungsfähigkeiten eines Anwendungsservers, AS (20), des den Dienst bereitstellenden IMS, und Kooperieren (S4; P3; R2) mit dem AS (20) bei der Erzeugung von Abrechnungsinformation bezüglich des Dienstes.

2. Verfahren nach Anspruch 1, umfassend:
Verwenden der bestimmten Abrechnungsfähigkeiten, um zu entscheiden, wo die Abrechnungsinformation erzeugt werden soll; und/oder
**Kooperieren mit dem AS, um eine unnötige** Verdopplung von Abrechnungsinformation zwischen der S-CSCF und dem AS zu vermeiden; und/oder
**Kooperieren mit dem AS, um einen unnötigen Verlust von** Abrechnungsinformation zwischen der S-CSCF und dem AS zu vermeiden; und/oder
Austauschen von Abrechnungsfähigkeitsinformation mit dem AS; und/oder Führen eines Datensatzes, der jeden AS identifiziert; und/oder
Führen eines Datensatzes der bestimmten Abrechnungsfähigkeiten für jeden AS; und/oder
Durchführen des Abrechnungsfähigkeitsbestimmungsschritts bei einer ersten Verkehrsinteraktion mit dem AS; und/oder
Erzeugen von Abrechnungsinformation in Abhängigkeit von den bestimmten Abrechnungsfähigkeiten.

3. Verfahren nach einem der vorhergehenden Ansprüche, umfassend: Bestimmen, **welcher AS den Dienst anbietet, und zwar** unter Verwendung eines Anfangsfilterkriteriums, IFC, das als Teil einer Registrierungsprozedur empfangen wurde.

4. Verfahren nach einem der vorhergehenden Ansprüche, umfassend: Durchführen des Abrechnungsfähigkeitsbestimmungsschritts als Teil einer Registrierungsprozedur.

5. Verfahren nach einem der vorhergehenden Ansprüche, umfassend: Durchführen des Abrechnungsfähigkeitsbestimmungsschritts als Teil einer Einladungsprozedur.

6. Verfahren nach einem der Ansprüche 3, 4 oder 5, worin die Prozedur eine Prozedur des Sitzungseinladungsprotokolls, SIP, ist.

7. Verfahren nach einem der vorhergehenden Ansprüche, umfassend: Bestimmen der **Abrechnungsfähigkeiten des AS unter Verwendung eines Verfahrens des** Sitzungseinladungsprotokolls, SIP.

8. Verfahren nach Anspruch 7, worin das Bestimmen der Abrechnungsfähigkeiten des AS die Verwendung eines von Folgendem umfasst:
einen Körper in erweiterbarer Auszeichnungssprache, XML, in einer Antwort auf ein OPTIONS-Verfahren des Sitzungseinladungsprotokolls, SIP, das zwischen der S-CSCF und dem AS durchgeführt wird, wobei die Antwort eine 200-OK-Antwort sein kann;
ein privater Datenkopf des Sitzungseinladungsprotokolls, SIP, der die Fähigkeiten in einem OPTIONS-Verfahren des Sitzungseinladungsprotokolls, SIP, das zwischen der S-CSCF und dem AS durchgeführt wird, umfasst;
ein privater SIP-Datenkopf, der die Fähigkeiten in einer 200-OK-Antwort auf eine im AS empfangene REGISTER-Nachricht des Sitzungseinladungsprotokolls, SIP, umfasst; und
eine Anfrage des leichten Verzeichniszugriffsprotokolls, LDAP, oder des Hypertexttransferprotokolls, HTTP, an den AS.

9. Verfahren zur Verwendung durch einen Anwendungsserver, AS (20), eines IP-Multimediasubsystems, IMS, wobei der AS (20) einen Dienst für mindestens einen Nutzer bereitstellt und das Verfahren **dadurch gekennzeichnet ist, dass** es umfasst: Bereitstellen (S2; P2) der Abrechnungsfähigkeiten des AS (20) für eine versorgende Rufsitzungssteuerungsfunktion, S-CSCF, des IMS, die dem Nutzer den Dienst leistet, und Kooperieren (S4; P3) mit der S-CSCF bei der Erzeugung von Abrechnungsinformation bezüglich des Dienstes.

10. **Vorrichtung zur Verwendung als oder in einer versorgenden** Rufsitzungssteuerungsfunktion, S-CSCF (10), eines IP-Multimediasubsystems, IMS, wobei die Vorrichtung **dadurch gekennzeichnet ist, dass** sie Mittel (12) zum für jeden aus einer Vielzahl von Diensten, die Nutzern durch die S-CSCF geleistet werden, erfolgenden Bestimmen der Abrechnungsfähigkeiten eines Anwendungsservers, AS (20), des den Dienst bereitstellenden IMS, und Mittel (16) zum Kooperieren mit dem AS (20) bei der Erzeugung von Abrechnungsinformation bezüglich des Dienstes umfasst.

11. Vorrichtung zur Verwendung als oder in einem Anwendungsserver, AS (20), eines IP-Multimediasubsystems, IMS, wobei der AS (20) einen Dienst für mindestens einen Nutzer bereitstellt und die Vorrichtung **dadurch gekennzeichnet ist, dass** sie Mittel (22) zum Bereitstellen der Abrechnungsfähigkeiten des AS (20) für eine versorgende Rufsitzungssteuerungsfunktion, S-CSCF (10), des IMS, die dem Nutzer den Dienst leistet, und Mittel (26) zum Kooperieren mit der S-CSCF bei der Erzeugung von Abrechnungsinformation bezüglich des Dienstes umfasst.

12. Programm, das, wenn es auf einer Vorrichtung läuft, die Vorrichtung veranlasst, ein Verfahren nach einem der Ansprüche 1 bis 9 durchzuführen.

13. Programm nach Anspruch 12, getragen auf einem Trägermedium.

14. Programm nach Anspruch 13, worin das Trägermedium ein Übertragungsmedium ist.

15. Speichermedium, das ein Programm nach Anspruch 12 trägt.

## Revendications

1. Procédé destiné à être utilisé par une fonction de contrôle de session d'appel de desserte, (S-CSCF) (10), d'un sous-système multimédia IP, IMS, ledit procédé étant **caractérisé en ce qu'**il comprend, pour chacun d'une pluralité de services proposés à des utilisateurs par ladite S-CSCF (10), la détermination (S2 ; P2 ; R1) des capacités de facturation d'un serveur d'application, AS (20), dudit IMS qui propose ledit service, et la coopération (S4 ; P3 ; R2) avec ledit AS (20) dans le cadre de la génération d'informations de facturation relatives audit service.

2. Procédé selon la revendication 1, qui comprend :
l'utilisation desdites capacités de facturation déterminées afin de décider à quel endroit lesdites informations de facturation doivent être générées ; et/ou
la coopération avec ledit AS afin d'éviter toute duplication inutile desdites informations de facturation entre ladite S-CSCF et ledit AS ; et/ou
la coopération avec ledit AS afin d'éviter toute perte inutile desdites informations de facturation entre ladite S-CSCF et ledit AS ; et/ou
l'échange desdites informations de capacité de facturation avec ledit AS ; et/ou
la conservation d'une archive identifiant chaque AS ; et/ou
la conservation d'une archive pour les capacités de facturation déterminées de chaque AS ; et/ou
l'exécution de l'étape de détermination des capacités de facturation au niveau d'une première interaction de trafic vers ledit AS ; et/ou
la génération d'informations de facturation selon lesdites capacités de facturation déterminées.

3. Procédé selon l'une quelconque des revendications précédentes, qui comprend la détermination de l'AS qui propose ledit service à l'aide d'un critère de filtre initial, IFC, reçu dans le cadre d'une procédure d'enregistrement.

4. Procédé selon l'une quelconque des revendications précédentes, qui comprend l'exécution de l'étape de détermination des capacités de facturation dans le cadre d'une procédure d'enregistrement.

5. Procédé selon l'une quelconque des revendications précédentes, qui comprend l'exécution de ladite étape de détermination des capacités de facturation dans le cadre d'une procédure d'invitation.

6. Procédé selon la revendication 3, 4 ou 5, dans lequel ladite procédure est une procédure de protocole de lancement de session, SIP.

7. Procédé selon l'une quelconque des revendications précédentes, qui comprend la détermination des capacités de facturation dudit AS à l'aide d'un procédé de protocole de lancement de session, SIP.

8. Procédé selon la revendication 7, dans lequel la détermination des capacités de facturation dudit AS comprend l'utilisation de l'un :
d'un corps de langage de balisage extensible, XML, dans une réponse à un procédé OPTIONS de protocole de lancement de session, SIP, exécuté entre ladite S-CSCF et ledit AS, ladite réponse pouvant être une réponse 200 OK ;
d'un en-tête privé de protocole de lancement de session, SIP, qui comprend les capacités d'un procédé OPTIONS de protocole de lancement de session, SIP, exécuté entre ladite S-CSCF et ledit AS ;
d'un en-tête privé SIP qui comprend lesdites capacités dans une réponse 200 OK à un message REGISTER de protocole de lancement de session, SIP, reçu au niveau dudit AS ; et
d'une requête de protocole d'accès à un répertoire léger, LDAP, ou une requête de protocole de transfert hypertexte, HTTP, envoyée audit AS.

9. Procédé destiné à être utilisé par un serveur d'application, AS, (20) d'un sous-système multimédia IP, IMS, ledit AS (20) proposant un service à au moins un utilisateur, ledit procédé étant **caractérisé en ce qu'**il comprend la transmission (S2 ; P2) des capacités de facturation dudit AS (20) à une fonction de contrôle de session d'appel de desserte, S-CSCF, de l'IMS qui propose ledit service audit utilisateur, et la coopération (S4 ; P3) avec ladite S-CSCF dans le cadre de la génération d'informations de facturation relatives audit service.

10. Appareil destiné à être utilisé comme ou dans une fonction de contrôle de session d'appel de desserte, S-CSCF, (10) d'un sous-système multimédia IP, IMS, ledit appareil étant **caractérisé en ce qu'**il comprend un moyen (12) destiné à déterminer, pour chacun d'une pluralité de services proposés à des utilisateurs par ladite S-CSCF, les capacités de facturation d'un serveur d'application, AS, (20) dudit IMS qui propose ledit service, et un moyen (16) destiné à coopérer avec ledit AS (20) dans le cadre de la génération desdites informations de facturation relatives audit service.

11. Appareil destiné à être utilisé comme ou dans un service d'application, AS, (20) d'un sous-système multimédia IP, IMS, ledit AS (20) proposant un service à au moins un utilisateur, ledit appareil étant **caractérisé en ce qu'**il comprend un moyen (22) destiné à fournir les capacités de facturation dudit AS (20) à une fonction de contrôle de session d'appel de desserte, S-CSCF, (10) de l'IMS qui propose ledit service audit utilisateur, et un moyen (26) destiné à coopérer avec ladite S-CSCF dans le cadre de la génération desdites informations de facturation relatives audit service.

12. Programme qui, lorsqu'il est exécuté sur un appareil, lui permet d'exécuter un procédé selon l'une quelconque des revendications 1 à 9.

13. Programme selon la revendication 12, exécuté sur un support.

14. Programme selon la revendication 13, dans lequel ledit support est un support de transmission.

15. Support de stockage qui contient un programme selon la revendication 12.
